# EUROPÄISCHE PATENTSCHRIFT

(11) **EP 3 387 484 B1**
(45) Veröffentlichungstag und Bekanntmachung des Hinweises auf die Patenterteilung: **18.08.2021**
(21) Anmeldenummer: 16798683.5
(22) Anmeldetag: 15.11.2016
(51) Int. Cl.: G02B 27/01

(54) **ANORDNUNG ZUR REFLEXIONSMINDERUNG VON UMGEBUNGSLICHT FÜR EINE FRONTSCHEIBENANZEIGEEINRICHTUNG FÜR EIN KRAFTFAHRZEUG**
ASSEMBLY FOR THE REDUCTION OF REFLECTION OF AMBIENT LIGHT FOR A WINDSHIELD DISPLAY FOR A MOTOR VEHICLE
ENSEMBLE POUR LA RÉDUCTION DE LA RÉFLECTION DE LA LUMIÈRE AMBIANTE POUR L'AFFICHAGE PAR PARE-BRISE D'UN VÉHICULE À MOTEUR

(30) Priorität: 11.12.2015 DE 102015224939
(43) Veröffentlichungstag der Anmeldung: 17.10.2018
(73) Patentinhaber: Bayerische Motoren Werke Aktiengesellschaft, 80809 München (DE)
(72) Erfinder: REUM, Eric, 82178 Puchheim (DE)
(86) Internationale Anmeldenummer: PCT/EP2016/077678
(87) Internationale Veröffentlichungsnummer: WO 2017/097548

(56) Entgegenhaltungen:
- EP-A1- 2 884 637
- CN-A- 104 680 954
- DE-T2- 69 022 932
- US-A1- 2009 046 361

## Beschreibung

Die Erfindung betrifft Frontscheibenanzeigeeinrichtungen, insbesondere Head-Up-Display-Einrichtungen, für Kraftfahrzeuge. Insbesondere betrifft die vorliegende Erfindung Maßnahmen zur Unterdrückung von Störreflexionen durch in eine Projektionseinrichtung der Frontscheibenanzeigeeinrichtung einfallendes Umgebungslicht.

Frontscheibenanzeigeeinrichtungen, wie Head-Up-Displays, zur visuellen Anzeige von Informationen im Blickfeld eines Fahrers eines Kraftfahrzeuges sind aus dem Stand der Technik bekannt. Beispielsweise beschreibt die Druckschrift DE102010032998A1 ein Head-Up-Display für ein Kraftfahrzeug mit einer Projektionseinrichtung, über die ein anzuzeigendes Bild auf eine als Kombiniereinrichtung wirkende Frontscheibe eines Kraftfahrzeugs projiziert wird. Derartige Frontscheibenanzeigeeinrichtungen haben im Unterschied zu den übrigen Anzeigeeinrichtungen im Kraftfahrzeug den Vorteil, dass der Fahrer nicht den Blick von dem Verkehrsgeschehen abwenden muss, um wichtige Informationen, wie zum Beispiel die momentane Fahrzeuggeschwindigkeit oder optische Anweisungen eines Navigationssystems zu erfassen.

Bei Frontscheibenanzeigeeinrichtungen wird die Projektion der visuellen Information auf die Frontscheibe in der Regel so durchgeführt, dass für den Fahrer der Eindruck entsteht, dass sich das Bild außerhalb des Fahrgastraums vor dem Fahrzeug befindet. Dadurch ist es möglich, dass zum Erfassen der angezeigten Informationen die Fokussierung der Augen geringer ausfallen kann.

Bei bekannten Frontscheibenanzeigeeinrichtungen werden Maßnahmen vorgesehen, um zu vermeiden, dass Umgebungslicht, das in eine Projektionsrichtung der Frontscheibenanzeigeeinrichtung fällt, auf die Frontscheibe des Kraftfahrzeugs reflektiert wird und die Darstellung der anzuzeigenden Informationen beeinträchtigt. Daher enthält die Projektionseinrichtung in der Regel eine reflektierende und gekrümmte Abdeckscheibe, die einfallendes Umgebungslicht in Richtung einer lichtabsorbierenden Fläche, auch Spiegelbank genannt, reflektiert. Das reflektierte Umgebungslicht wird an der lichtabsorbierenden Fläche nur in geringem Maß reflektiert, sodass störende Reflexionen von Umgebungslicht oder Ausleuchtungen in einem Anzeigebereich auf der Frontscheibe im Wesentlichen vermieden werden können.

Frontscheibenanzeigeeinrichtungen werden üblicherweise in einer Oberseite einer Instrumententafel im Bereich über der Lenksäule eingesetzt, wo in der Regel nur ein begrenzter Bauraum zur Verfügung steht. In der Regel weißt die Baugruppe aus der lichtabsorbierenden Fläche und der reflektierenden gekrümmten Abdeckscheibe jedoch eine Bauhöhe zwischen 5 und 10 cm auf, die die Gesamtbauhöhe der Frontscheibenanzeigeeinrichtung erheblich vergrößert. Eine Reduzierung der Bauhöhe dieser Baugruppe kann nur bedingt erreicht werden, da bei einer flacheren, das heißt weniger gekrümmten Abdeckscheibe, eine größere Höhe der lichtabsorbierenden Fläche benötigt wird.

In der Druckschrift DE102010032998A1 wird dazu vorgesehen, dass die lichtabsorbierende Fläche zumindest teilweise durch eine innenseitige Beschichtung der Frontscheibe gebildet wird. Die Bauhöhe des Head-Up-Displays wird dennoch erheblich durch die gekrümmte reflektierende Abdeckscheibe bestimmt.

Auch aus der Druckschrift DE102007035255A1 ist eine Frontscheibenanzeige bekannt mit einer in einem Gehäuse aufgenommenen Anzeigequelle zur Überlagerung eines virtuellen Bildes, das durch eine Öffnung des Gehäuses auf eine Frontscheibe eines Fahrzeugs projiziert wird, mit einem Vordergrundbild durch die Frontscheibe. Die Abdeckung ist so ausgebildet, dass ein Eintritt von Fremdteilchen durch die Öffnung ins Innere des Gehäuses verhindert wird und das von der Anzeigequelle projizierte Bild hindurchgelangen kann. Die Abdeckung ist im Querschnitt im Wesentlichen keilförmig ausgebildet, sodass eine im Wesentlichen gerade Lichtbahn eines direkten Lichtes von einem willkürlichen Pixel auf der Anzeigequelle durch die Abdeckung ohne Reflexion mit der Lichtbahn eines reflektierten Lichts von dem willkürlichen Punkt, das auf den Innenflächen der Abdeckung zweimal reflektiert wird, ausgerichtet wird. Durch die gekrümmte Ausgabefläche der Abdeckung wird das durch die Frontscheibe von außen eintretende Licht in alle Richtungen, mit Ausnahme der Richtung zum Augenpunkt eines Fahrers des Fahrzeuges, reflektiert.

Durch das vorsehen der gekrümmten Ausgabefläche ist jedoch die Bauhöhe der gesamten Projektionseinrichtung relativ hoch.

Aus der Druckschrift DE102011075205A1 ist eine Anzeigevorrichtung für ein Fahrzeug bekannt, wobei die Anzeigevorrichtung ein Gehäuse mit einer Außenwand umfasst, in der eine Austrittsblende angeordnet ist. Weiterhin umfasst die Anzeigevorrichtung einen Bildgeber zum Erzeugen einer Bildinformation, wobei der Bildgeber innerhalb des Gehäuses angeordnet ist. Weiterhin umfasst die Anzeigevorrichtung zumindest ein optisches Element, das innerhalb des Gehäuses angeordnet ist, und ausgebildet ist, um die Bildinformationen in einer Fokalebene, die im Bereich der Austrittsblende angeordnet ist, zu konzentrieren.

Eine Frontscheibenanzeigeeinrichtung mit einem Abschirmgitter ist aus der DE69022932T2 bekannt.

Es ist daher Aufgabe der vorliegenden Erfindung eine Frontscheibenanzeige zur Verfügung zu stellen, bei der Störreflexionen durch einfallendes Umgebungslicht vermieden werden und die zugleich eine geringe Bauhöhe aufweist. Dabei soll es insbesondere vermieden werden können, dass die dazu notwendigen Mittel zu Abschattungen und / oder Verschlechterungen in dem an die Frontscheibe projizierten Bild führen.

### Offenbarung der Erfindung

Diese Aufgabe wird durch eine Anordnung für eine Frontscheibenanzeigeeinrichtung für ein Kraftfahrzeug gemäß Anspruch 1 sowie durch eine Frontscheibenanzeigeeinrichtung gemäß dem nebengeordneten Anspruch gelöst.

Weitere Ausgestaltungen sind in den abhängigen Ansprüchen angegeben. Gemäß einem ersten Aspekt ist eine Anordnung zur Reflexionsminderung für eine Frontscheibenanzeigeeinrichtung für ein Kraftfahrzeug entsprechend Anspruch 1 vorgesehen.

Eine Idee der obigen Anordnung für eine Frontscheibenanzeigeeinrichtung besteht darin, eine Gitterstruktur vorzusehen, die ein oder mehrere Gitterelemente, insbesondere längliche Gitterelemente, wie zum Beispiel Lamellen aufweist. Das Gitterelement ist bevorzugt flächig ausgebildet, wobei dessen Flächenrichtung in Projektionsrichtung einer Projektionseinrichtung verläuft. Flächig bedeutet dabei, dass das Gitterelement sich entlang der Projektionsrichtung weiter erstrecken, als in einer Richtung, die Senkrecht zu der Projektionsrichtung gerichtet ist. Insbesondere kann die Anordnung eine transparente Abdeckscheibe aufweisen, an der die Gitterstruktur mit den Gitterelementen angeordnet ist. Die Abdeckscheibe dient dazu, die Projektionseinrichtung gegen Verunreinigungen zu schützen. Auf die Abdeckscheibe fallendes Umgebungslicht kann auf deren Oberfläche reflektiert werden und das so reflektierte Umgebungslicht trifft auf die Seitenflächen der Gitterelemente, die vorzugsweise lichtabsorbierend ausgebildet sein können. Somit dienen die Seitenflächen der Gitterelemente jeweils als eine Spiegelbank für einen entsprechenden, reflektierenden Abschnitt der Abdeckscheibe. Das Abschirmgitter wird von einem Projektionsstrahlenbündel durchlaufen, welches von der Projektionseinrichtung abgestrahlt wird, um ein Bild an eine Frontscheibe eines Fahrzeuges zu projizieren. Daher kann es durch das Abschirmgitter zu partiellen Abschattungen in dem Bild und somit zu einer Verschlechterung der Ablesbarkeit des Bildes führen. Ein Anwender der Frontscheibenanzeigeeinrichtung wird irritiert, wenn das Abschirmgitter sichtbar ist. Insbesondere bei einer Kopfbewegung des Anwenders bewegt sich die Abschattung relativ zu dem Bild, was die Ablesbarkeit weiter einschränkt. Daher wird das Abschirmgitter erfindungsgemäß von einer Bewegungseinrichtung in Bewegung versetzt. Die Bewegung ist dabei parallel zu der Oberfläche der Abdeckscheibe. Dadurch verschwimmen die Konturen des Abdeckgitters in Bewegungsrichtung. Ab einer bestimmten Bewegungsgeschwindigkeit oder Schwingfrequenz des Abdeckgitters wird dieses für den Betrachter unscharf und verschwindet. Die Einschränkung der Abschattung des Bildes der Frontscheibenanzeigeeinrichtung verschwindet. Weist die Gitterstruktur des Abschirmgitters längliche Gitterelemente auf, so ist die Bewegung bevorzugt in eine Richtung gerichtet, die nicht der Erstreckungsrichtung der länglichen Gitterelemente entspricht.

Auf diese Weise ist es zudem möglich, dass die Gitterstruktur mit dem einen oder den mehreren flächigen Gitterelementen unmittelbar über oder nahe der Abdeckscheibe angeordnet sein kann, sodass die gesamte Bauhöhe der Baugruppe, die zur Unterdrückung von Störreflexionen in dem Anzeigenbild dient, erheblich verringert werden kann. Dadurch, dass das eine oder die mehreren Gitterelemente flächig, das heißt lamellenartig, ausgebildet und in Projektionsrichtung der Projektionseinrichtung ausgerichtet sind, beeinträchtigen diese die Darstellungsqualität und Lichtstärke des projizierten Bildes nur minimal und reduzieren zudem durch ihre Abschattungswirkung die Menge des Umgebungslichts, das auf die Abdeckscheibe treffen kann.

Bevorzugt ist die Bewegung eine translatorische Bewegung. Das bedeutet mit anderen Worten, dass die Bewegungseinrichtung das Abschirmgitter derart bewegt, dass jeder Punkt des Abschirmgitters bei der Bewegung dieselbe Verschiebung erfährt. Insbesondere ist die translatorische Bewegung eine lineare Bewegung. Alternativ ist die Bewegung eine rotatorische Bewegung. Dies bedeutet mit anderen Worten, dass die Bewegungseinrichtung das Abschirmgitter bevorzugt in einer Drehbewegung, insbesondere in einer Drehbewegung um deren Zentrum, bewegt. Dies ist vorteilhaft, da insbesondere bei einer Drehung des Abschirmgitters um dessen Zentrum nur minimal zusätzlicher Bauraum benötigt wird, um eine Bewegung zu ermöglichen.

Bevorzugt bewegt die Bewegungseinrichtung das Abschirmgitter wechselweise in gegenläufige Bewegungsrichtungen. Das Abschirmgitter wird also hin und her bewegt. Dies ermöglicht, dass nur wenig Raum für die Bewegung des Abschirmgitters benötigt wird und dass das Abschirmgitter bei der Bewegung über der Abdeckscheibe bleibt. Dies ermöglicht auch eine platzsparende Dimensionierung des Abschirmgitters und somit der Anordnung. Eine Amplitude der Bewegung mit gegenläufigen Bewegungsrichtungen ist dabei abhängig von der Größe der Gitteröffnungen und Breite der Wandstärke des Abschirmgitters gewählt.

Die Bewegungseinrichtung ist bevorzugt ferner dazu eingerichtet, eine Frequenz der Bewegung des Abschirmgitters basierend auf einer Bildwiedergabefrequenz der Projektionseinrichtung zu wählen, und/oder eine Bildwiedergabefrequenz der Projektionseinrichtung basierend auf einer Frequenz der Bewegung des Abschirmgitters zu wählen. Durch eine gezielte Anpassung der Bildwiedergabefrequenz, auch Anzeigefrequenz des Bildes genannt, der Frontscheibenanzeigeeinrichtung zu der Frequenz der Bewegung des Abschirmgitters kann ein Abschattungseffekt weiter reduziert oder verstärkt werden. So ist es beispielsweise aufgrund des Stroboskop-Effekts vorteilhaft, wenn sich das Abschirmgitter bei jeder Wiedergabe aufeinanderfolgender Einzelbilder in wechselnden Positionen befindet.

Auch ist es vorteilhaft, wenn das Abschirmgitter schwingfähig gelagert ist und von der Bewegungseinrichtung zu einer Schwingungsbewegung angeregt wird. Das Abschirmgitter wird somit um eine Amplitude aus einer Nullposition des Abschirmgitters heraus bewegt. Die Nullposition ist dabei eine Position, von der aus sich das Abschirmgitter bei der Schwingungsbewegung in gleichem Maße in unterschiedliche Richtungen bewegen kann. Dadurch, dass das Abschirmgitter schwingfähig gelagert ist, reicht dabei eine geringe Anregung aus, um das Abschirmgitter in Bewegung zu versetzen. Dies ermöglicht eine kostensparende Auslegung der Bewegungseinrichtung. Die Amplitude der Bewegung, also eine Anregungsamplitude, ist dabei abhängig von der Größe der Gitteröffnungen und Breite der Wandstärke des Abschirmgitters gewählt.

Auch ist es vorteilhaft, wenn die Frequenz der Schwingungsbewegung eine Resonanzfrequenz des schwingfähig gelagerten Abschirmgitters ist. Somit kann das Abschirmgitter mit minimalem Energieaufwand zu einer Schwingung mit großer Amplitude angeregt werden und in diesem Schwingungszustand gehalten werden.

Auch ist es vorteilhaft, wenn die Bewegungseinrichtung zumindest ein Federelement umfasst, über welches das Abschirmgitter gefedert in einer Ruheposition gehalten wird. Die Federelemente sind dazu bevorzugt derart angeordnet, dass diese jeweils eine Federkraft bereitstellen, die entlang oder parallel zu der Oberfläche der Abdeckscheibe gerichtet ist. Durch eine federgelagerte Aufhängung des Abschirmgitters wird auf besonders einfache Weise eine schwingfähige Lagerung des Abschirmgitters erreicht. Die Ruheposition ist dabei eine Position, welche das Abschirmgitter einnimmt, wenn dieses nicht von der Bewegungseinrichtung in Bewegung versetzt wird.

Die Gitterelemente können aus einem Kunststoff oder einem Metall, insbesondere Edelstahl oder Aluminium, ausgebildet sein, wobei insbesondere deren Seitenflächen mit einem lichtabsorbierenden Material, insbesondere einer mattschwarzen Beschichtung, versehen sind. Dabei können durch das eine oder die von mehreren Gitterelemente der Gitterstruktur Gitteröffnungen gebildet werden, die einen mehreckigen Querschnitt, insbesondere einen hexagonalen Querschnitt aufweisen. Es kann dabei vorgesehen sein, dass die Gitterelemente lamellenartig ausgebildet und insbesondere flächenparallel zueinander angeordnet und voneinander beabstandet sind. Die Gitterelemente können eine Höhe in Projektionsrichtung aufweisen, die mindestens das Fünffache, insbesondere mindestens das Zwanzigfache ihrer jeweiligen Dicke in einer Anordnungsrichtung der Gitterelemente entspricht. Ferner können die Gitterelemente eine Höhe in Projektionsrichtung aufweisen, die dem 0,5-fache bis Fünffache, insbesondere das Einfache bis Dreifache einer kleinsten Breite einer durch die Gitterelemente gebildeten Gitteröffnung in Anordnungsrichtung der Gitterelemente entspricht.

Gemäß einem weiteren Aspekt kann die obige Abdeckung für eine Frontscheibenanzeigeeinrichtung für ein Kraftfahrzeug verwendet werden.

Gemäß einem weiteren Aspekt ist eine Frontscheibenanzeigeneinrichtung für ein Kraftfahrzeug vorgesehen, umfassend eine Projektionseinrichtung zum Projizieren eines Projektionsstrahlenbündels für die Darstellung einer Abbildung mittels Reflexion an einem Anzeigenbereich auf einer Frontscheibe des Kraftfahrzeuges, und die obige Abdeckung, die so an der Projektionseinrichtung angeordnet ist, dass die Abdeckscheibe die Projektionseinrichtung vor Umwelteinflüssen schützt. Das Gitterelement der Gitterstruktur ist dabei bevorzugt mit seiner Höhenrichtungen im Wesentlichen parallel zur Richtung des Projektionsstrahlenbündels ausgerichtet.

Gemäß einem weiteren Aspekt ist ein Kraftfahrzeug vorgesehen, umfassend eine Instrumententafel, deren Oberfläche zwischen einer Frontscheibe des Kraftfahrzeugs und einer Längssäule angeordnet ist, die obige Frontscheibenanzeigeeinrichtung, wobei die Anordnung im Wesentlichen bündig zur Oberseite der Instrumententafel angeordnet ist.

Ausführungsformen werden nachfolgend anhand der beigefügten Zeichnungen näher erläutert. Es zeigen:
- Figur 1: eine schematische Querschnittsdarstellung durch eine Frontscheibenanzeigeeinrichtung für ein Kraftfahrzeug,
- Figur 2: eine perspektivische Darstellung einer zweiteiligen Abdeckung für die Frontscheibenanzeigeneinrichtung der Figur 1,
- Figur 3: eine Abdeckung für eine Frontscheibenanzeigeeinrichtung mit einer wabenförmigen Gitterstruktur mit einer schematischen Darstellung einer Bewegungseinrichtung,
- Figur 4: eine schematische Querschnittsdarstellung durch eine weitere Frontscheibenanzeigeeinrichtung für ein Kraftfahrzeug, und

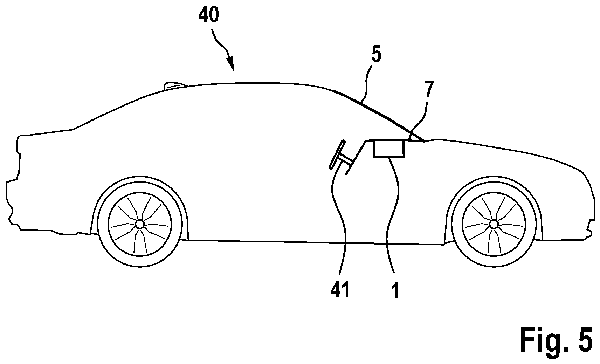

- Figur 5: eine schematische Querschnittsdarstellung eines erfindungsgemäßen Kraftfahrzeuges.

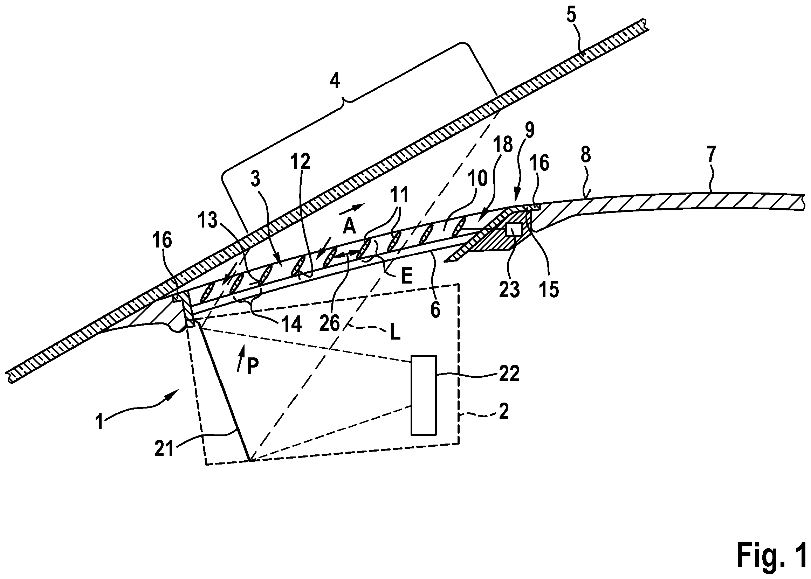

Figur 1 zeigt schematisch eine Querschnittsdarstellung durch eine Frontscheibenanzeigeeinrichtung 1, wie zum Beispiel ein Head-Up-Display. Die Frontscheibenanzeigeeinrichtung 1 umfasst eine optische Projektionseinrichtung 2 und eine Abdeckung 3.

Die Frontscheibenanzeigeeinrichtung 1 ist im Wesentlichen in eine Öffnung 9 in eine Oberseite 8 einer Instrumententafel 7 zwischen einem Lenkrad und einer Frontscheibe 5 so eingesetzt, dass diese im Wesentlichen bündig mit der Oberseite 8 abschließt, beziehungsweise an diese angrenzt.

Die Projektionseinrichtung 2 gibt in geeigneter Weise ein Projektionsstrahlenbündel L aus, das in einer Projektionsrichtung P auf einen Anzeigenbereich 4 einer Frontscheibe 5 eines Kraftfahrzeuges 40 gerichtet ist. Die Projektionseinrichtung 2 umfasst in bekannter Weise ein System aus einem oder mehreren Spiegeln 21, gegebenenfalls Linsen (nicht gezeigt) und einem Projektor 22. Ein von dem Projektor 22 ausgegebenes Projektionsbild wird als Projektionsstrahlenbündel L durch den einen oder die mehreren Spiegel 21 in die Projektionsrichtung P ausgerichtet und auf den Anzeigenbereich 4 projiziert. Das in dem Anzeigenbereich 4 angezeigte Projektionsbild dient zur Darstellung einer Information für einen Fahrer des Kraftfahrzeuges 40 und wird so abgebildet, dass der Fahrer den Eindruck hat, dass sich das Projektionsbild außerhalb der Fahrgastzelle vor der Frontscheibe 5 befindet. Das Projektionsstrahlenbündel L wird dabei an dem Anzeigenbereich 4 der Frontscheibe 5 des Kraftfahrzeuges 40 reflektiert und somit mittels einer Reflexion dargestellt.

Während üblicherweise zwischen der Projektionseinrichtung 2 und dem Anzeigenbereich 4 eine Abdeckscheibe 6 mit einer Krümmung ausgebildet ist, um einfallendes Umgebungslicht auf eine seitlich angeordnete lichtabsorbierende Fläche zu richten, ist nun unmittelbar an der Projektionseinrichtung 2 eine Abdeckscheibe 6 vorgesehen, die die Projektionseinrichtung 2 vor einer Verschmutzung durch z. B. Staubpartikel schützt. Die Abdeckscheibe 6 kann transparent und im Wesentlichen eben ausgebildet sein. Jedoch sind auch beliebig gekrümmte Formen der Abdeckscheibe 6 denkbar.

Unmittelbar in Richtung der Frontscheibe 5 an die Abdeckscheibe 6 anschließend oder mit geringem Abstand, z. B. einem Abstand von ca. 1 mm bis 20 mm, ist ein Abschirmgitter 10 vorgesehen, das flächige Gitterelemente 11 aufweist, die sich mit ihrer Höhe E in Projektionsrichtung P des Projektionsstrahlenbündels L erstrecken. Mit anderen Worten können sich die Gitterelemente 11 bezüglich des Projektionsstrahlenbündels L parallel oder im Wesentlichen parallel zu dem Projektionsstrahlenbündel L erstrecken.

Die Höhe der Gitterelemente 11 in Richtung des Projektionsstrahlenbündels L kann zur Anordnungsrichtung A der Gitterelemente geneigt sein oder senkrecht dazu verlaufen.

Das Maß der Höhe der Gitterelemente 11 in Richtung des Projektionsstrahlenbündels L ist abhängig von der Neigung zur Anordnungsrichtung A der Gitterelemente 11 und abhängig von dem Abstand der einzelnen Gitterelemente 11 zueinander, beziehungsweise der Größe der zwischen den Gitterelementen 11 gebildeten Gitteröffnungen 14 gewählt. Die Dimensionierung erfolgt so, dass durch die Gitteröffnung 14 auf die Abdeckscheibe 6 fallendes Umgebungslicht auf eine erste Seitenfläche 12 der Gitterelemente 11 reflektiert wird, wo dieses absorbiert wird.

Die Gitterelemente 11 können als parallel (flächenparallel) zueinander ausgerichtete Lamellen vorgesehen sein, sodass längliche Gitteröffnungen 14 ausgebildet werden, oder als in Gitterform zueinander ausgerichteten Lamellen, zum Ausbilden von rechteckigen Gitteröffnungen 14 vorgesehen sein.

Insbesondere sind Abstand und Höhe E von als parallele Lamellen ausgebildeten Gitterelementen 11 so gewählt, dass zwischen den Gitterelementen 11 hindurch auf die Abdeckscheibe 6 fallendes Umgebungslicht überwiegend auf eine erste Seitenfläche 12 eines der angrenzenden Gitterelemente 11 reflektiert wird. Die ersten Seitenflächen 12 der Gitterelemente 11 sind lichtabsorbierend, insbesondere mattschwarz ausgebildet, sodass darauf reflektiertes Umgebungslicht möglichst absorbiert wird.

Insbesondere bei zur Anordnungsrichtung A geneigten Gitterelementen 11 kann einer der ersten Seitenflächen gegenüberliegenden zweite Seitenfläche 13 ebenfalls lichtabsorbierend, insbesondere mattschwarz, ausgebildet sein, um einfallendes Umgebungslicht direkt zu absorbieren, um eine Reflexion auf die Frontscheibe 5 zu unterbinden.

Die Gitterelemente 11 des Abschirmgitters 10 sind an deren Enden jeweils in einer Schiene 27 gelagert. Die Schienen 27 verlaufen parallel zu einer Oberfläche der Abdeckscheibe 6 auf Seiten der Windschutzscheibe 5. Dabei ist jeweils eine Schiene 27 auf gegenüberliegenden Seiten der Abdeckscheibe 6 angeordnet. Das Abschirmgitter 10 ist somit beweglich gelagert. Die mögliche Bewegung ist eine translatorische Bewegung.

Die Schienen sind an einem Abdeckrahmen 15 befestigt, welcher das Abschirmgitter 10 über diese Schienen 27 trägt. Das Abschirmgitter weist dazu an seinen Seiten entsprechende Führungselemente auf, welche in die Schienen 27 eingreifen. An dem Abdeckrahmen 15 ist ferner eine Bewegungseinrichtung 23 angeordnet, die dazu eingerichtet ist, das Abschirmgitter 10 in eine Bewegung zu versetzen. Diese Bewegung folgt dem Verlauf der Schienen 27 und ist somit entlang der Oberfläche der Abdeckscheibe 6 gerichtet. Die Bewegungseinrichtung 23 ist beispielsweise ein Linearmotor, ein Motor mit einer rotierenden Achse, welcher mit einer entsprechenden mechanischen Umsetzung versehen ist, oder ein Elektromagnet, welcher auf das Abschirmgitter 10 einwirkt. Grundsätzlich ist als Bewegungseinrichtung 23 jegliche Vorrichtung geeignet, welche eine mechanische Bewegung erzeugt.

Die Bewegungseinrichtung 23 wird aktiviert, wenn die Projektionseinrichtung 2 aktiv ist. Damit wird das Abschirmgitter 10 bewegt, wobei die Richtung dieser Bewegung zum einen entlang der Oberfläche der Abdeckscheibe gerichtet ist und zum anderen in einem rechten Winkel zu der Erstreckungsrichtung der Gitterelemente 11, also der Lamellen, und somit entlang der Anordnungsrichtung A gerichtet ist. Diese Bewegung ist durch den Richtungspfeil 26 angedeutet. Dabei wird das Abschirmgitter 10 wechselweise zunächst in eine erste Richtung 26a und dann in eine zweite Richtung 26b bewegt, wobei die erste Richtung 26a und die zweite Richtung 26b entgegengesetzte Richtungen sind, sodass die Bewegung des Abschirmgitters 10 auf einen Bereich über der Abdeckscheibe 6 begrenzt ist. Die Bewegungseinrichtung 23 bewegt das Abschirmgitter 10 somit hin und her, also wechselweise in gegenläufige Bewegungsrichtungen.

Optional ist die Bewegungseinrichtung 23 ferner dazu eingerichtet, eine Frequenz der Bewegung des Abschirmgitters 10 basierend auf einer Bildwiedergabefrequenz der Projektionseinrichtung 2 zu wählen. So könnte die Bildwiedergabefrequenz der Projektionseinrichtung 2 als ein analoger oder digitaler Wert von der Projektionseinrichtung 2 an die Bewegungseinrichtung 23 übertragen werden. Die Bewegungseinrichtung 23 wählt eine Frequenz der Bewegung des Abschirmgitters 10, also der wechselweise gegenläufigen Bewegung, unterschiedlich zu der Bildwiedergabefrequenz der Projektionseinrichtung 2. Alternativ wird die Frequenz der Bewegung des Abschirmgitters 10 von der Bewegungseinrichtung 23 an die Projektionseinrichtung 2 übertragen und diese die Bildwiedergabefrequenz unterschiedlich zu der Frequenz der Bewegung des Abschirmgitters 10.

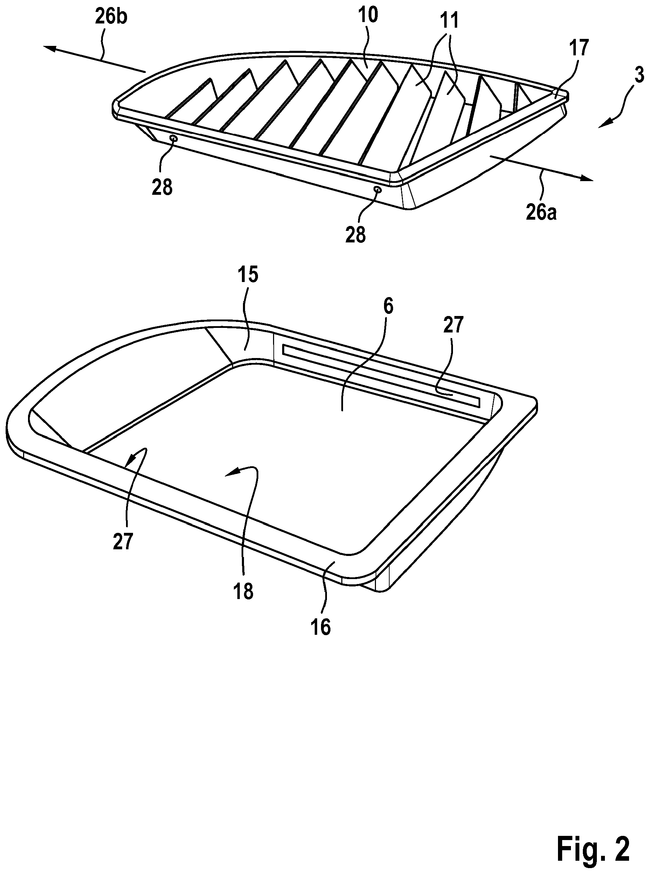

In Figur 2 ist eine mögliche Ausführungsform einer Abdeckung 3 mit einer Abdeckscheibe 6 und einem Abschirmgitters 10 in einer Explosionsdarstellung gezeigt. Man erkennt, dass die Abdeckung zweiteilig ausgebildet sein kann, wobei das Abschirmgitter 10 von der Abdeckscheibe 6 lösbar ist. Dadurch kann das Abschirmgitter 10 für eine Reinigung der Abdeckscheibe 6 abgenommen werden. Die Abdeckscheibe 6 ist in dem Abdeckrahmen 15 angeordnet, der in die Öffnung 9 der Oberseite 8 der Instrumententafel 7 eingesetzt werden kann. Der Abdeckrahmen 15 weist eine Höhe auf, so dass das Abschirmgitter 10 darin aufgenommen werden kann, so dass obere Kanten des Abschirmgitters 10 und des Abdeckrahmens 15 miteinander bündig abschließen. Ferner weist der Abdeckrahmen 15 einen abstehenden Rand 16 auf, der an der Oberseite 8 der Instrumententafel 7 über die Öffnung 9 übersteht und dadurch darin gehalten wird.

In dem Abdeckrahmen 15 ist die Abdeckscheibe 6 in einer Vertiefung 18 angeordnet, in die das separat ausgebildete Abschirmgitter 10 eingelegt werden kann. Die Vertiefung ist ausreichend groß, um genügend Raum für die Bewegung des Abschirmgitters 10 bereitzustellen. Für eine Führung der Bewegung sind die Schienen 27 an einer inneren Wandung des Abdeckrahmens 15 angeordnet.

Das Abschirmgitter 10 ist in dem vorliegenden Ausführungsbeispiel mit lamellenförmigen, parallel zueinander verlaufenden Gitterelementen 11 gebildet, die Gitterelemente können jedoch zum Ausbilden anderer Gitterarten auch andere Formen beziehungsweise Anordnungen aufweisen.

Die Gitterelemente 11 sind in einem Gitterrahmen 17 angeordnet. Die Gitterelemente 11 sind so in dem Gitterrahmen 17 angeordnet, dass die Gitterelemente 11 mit geringem Abstand über der Abdeckscheibe 6 angeordnet sind, wenn das Abschirmgitter 10 in den Abdeckrahmen 15 eingesetzt ist. Dabei greifen Führungselemente 28 des Gitterrahmens 17 in die Schienen 27 ein. Die Formgebung der Vertiefung 18 ist so an das Abschirmgitter 10 angepasst, dass bei Einsetzen des Abschirmgitters 10 in die Vertiefung 18 die Gitterelemente 11 so ausgerichtet sind, dass diese parallel zu dem Projektionsstrahlenbündel L verlaufen.

In der Ausführungsform der Figur 2 sind Gitterelemente 11 in Form von parallel angeordneten Lamellen vorgesehen. Die Lamellen können eine Höhe zwischen 5 und 20 mm und / oder einen Abstand in Anordnungsrichtung von 5 mm bis 25 mm aufweisen.

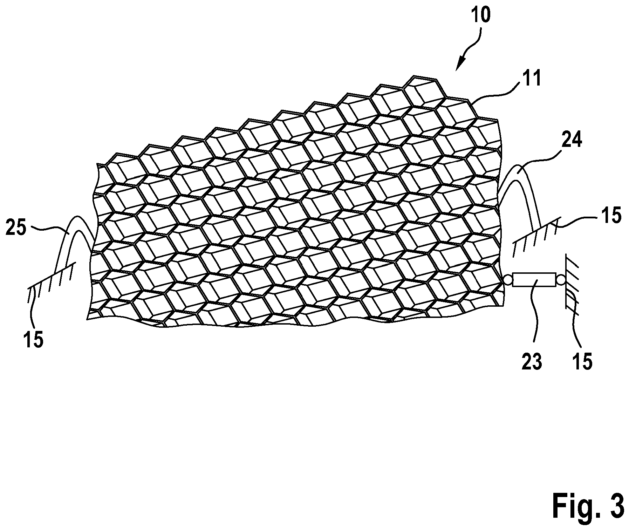

In Figur 3 ist eine alternative Gitterstruktur für das Abschirmgitter 10 gezeigt. Diese ist eine hexagonale Gitterstruktur, die eine sechseckige Gitteröffnung mit einem Durchmesser von 3,5 mm aufweist. Die Höhe der Gitterelemente der Gitterstruktur kann zwischen 3 und 10 mm, insbesondere zwischen 4 mm und 7 mm, zum Beispiel 6,5 mm betragen.

Gitterelemente 11 beziehungsweise Gitterstrukturen können grundsätzlich aus einem beliebigen Material gefertigt sein, wenn sich diese mit einer lichtabsorbierenden Seitenfläche versehen lassen können. So können die Gitterelemente 11 beziehungsweise die Gitterstrukturen aus einem Kunststoffmaterial, zum Beispiel mit Hilfe von Spritzguss, oder aus einem Metallmaterial hergestellt werden, wobei bei dem Material die Oberflächen entsprechend lichtabsorbierend ausgebildet werden sollten und dazu zum Beispiel mit einem lichtabsorbierenden Material beschichtet sein können.

Gitterelemente 11 beziehungsweise Gitterstrukturen, insbesondere hexagonale Gitterstrukturen, können insbesondere aus einem dünnwandigen Aluminiummaterial günstiger Weise hergestellt werden, insbesondere mit einer sehr geringen Wandstärke von 0,1 bis 0,5 mm.

Ferner ist in Figur 3 exemplarisch die Bewegungseinrichtung 23 dargestellt. Diese ist dabei ein Linearmotor, der auf einer Seite mit dem Abschirmgitter 10 und auf einer anderen Seite mit dem Abdeckrahmen 15 verbunden ist. Es ist ferner ersichtlich, dass das Abschirmgitter 10 schwingfähig gelagert ist. Dazu ist das Abschirmgitter 10 über ein erstes Federelement 24 mit dem Abdeckrahmen 15 verbunden und ist zudem über ein zweites Federelement 25 mit dem Abdeckrahmen 15 verbunden. Die Federelemente 24, 25 sind auf gegenüberliegenden Seiten des Abschirmgitters 10 angeordnet. Wird das Abschirmgitter 10 nicht zu einer Bewegung angeregt, so wird dieses durch die beiden Federelemente 24, 25 in einer Ruheposition gehalten.

Wird das Abschirmgitter 10 von der Bewegungseinrichtung 23 angestoßen, so wird dieses zu einer Schwingungsbewegung angeregt, da dieses von den Federelementen 24, 25 zurück in seine Ruheposition gezogen wird und sich aufgrund seiner Trägheit erst auf diese Ruheposition einschwingt. Wird das Abschirmgitter 10 in einer entsprechenden Frequenz von der Bewegungseinrichtung 23 angeregt, so wird dieses mit der entsprechenden Frequenz schwingen. Das Abschirmgitter wird dabei um eine gewisse Amplitude aus seiner Nullposition, die hier der Ruheposition entspricht, herausbewegt. Die Amplitude ist dabei so gewählt, dass diese größer als eine Wanddicke der Gitterelemente 11 ist. Um möglichst wenig Energie bei einer Anregung der Schwingungsbewegung aufzuwenden, ist die Frequenz der Schwingungsbewegung so gewählt, dass diese eine Resonanzfrequenz des schwingfähig gelagerten Abschirmgitters 10 ist. Somit findet die Anregung innerhalb der Eigenfrequenzen eines Schwingsystems statt, welches durch das Abschirmgitter 10 und die Federelemente 24, 25 gebildet wird.

Wird die Frequenz der Schwingungsbewegung an die Bildwiedergabefrequenz der Projektionseinrichtung 2 angepasst, so kann entweder die mechanische Anregung des Abschirmgitters 10 durch die Bewegungseinrichtung 23 in seiner Frequenz angepasst werden, oder aber es kann die Bildwiedergabefrequenz der Projektionseinrichtung 2 angepasst werden.

In alternativen Ausführungsformen der Erfindung ist die Bewegung eine rotatorische Bewegung. Das bedeutet, dass das Abschirmgitter 10 in eine Drehbewegung versetzt wird. Dabei kann das Abschirmgitter 10 entweder in eine Drehbewegung mit konstanter Geschwindigkeit in eine gleichbleibende Richtung erfolgen, oder das Abschirmgitter 10 wird wiederum, entsprechend der translatorischen Bewegung, wechselweise in gegenläufige Bewegungsrichtungen bewegt. Dabei ist es vorteilhaft, wenn das Abschirmgitter 10 keine rotationssymmetrische Struktur aufweist.

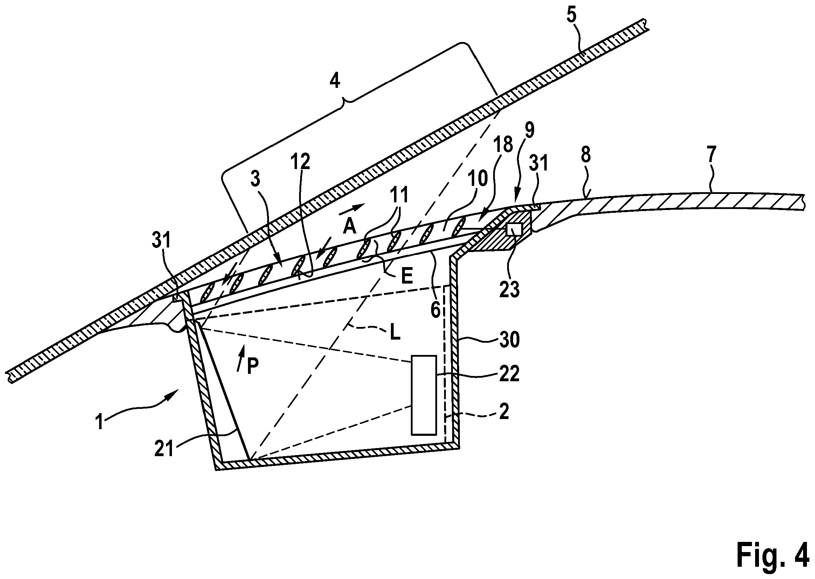

Figur 4 ist eine weitere Frontscheibenanzeigeeinrichtung für ein Kraftfahrzeug 40. Im Gegensatz zur Ausführungsform der Figur 1 ist die Projektionseinrichtung 2 gemeinsam mit der Abdeckscheibe 6 insbesondere in integrierter Aufbauweise, in einem Gehäuse 30 ausgebildet, sodass der Projektor 22 und die Spiegel 21 der Projektionseinrichtung 2 staubdicht umschlossen sind. Das Gehäuse 30 weist zudem einen abstehenden Rand 31 auf. Dadurch kann das Gehäuse 30 in die Öffnung 9 an der Oberseite der Instrumententafel 7 eingesetzt werden. Das Gehäuse 30 und die Abdeckscheibe 6 bilden an der Außenseite eine Ausnehmung, welche die Schienen umfasst, in welche das Abschirmgitter 10 eingelegt werden kann.

Anstelle von parallel zueinander angeordneten Lamellen 11 können ferner auch Gitterelemente beziehungsweise Gitterstrukturen vorgesehen sein, mit vier- oder mehreckigen Gitteröffnungen, deren Wandneigungen so ausgelegt sind, dass sie im Wesentlichen parallel zum Projektionsstrahlenbündel L der Projektionseinrichtung 2 verlaufen.

Neben der obigen schriftlichen Offenbarung wird explizit auf die Offenbarung der Figuren 1 bis 4 verwiesen.

### Bezugszeichenliste:

- 1: Frontscheibenanzeigeeinrichtung
- 2: Projektionseinrichtung
- 3: Abdeckung
- 4: Anzeigebereich
- 5: Frontscheibe
- 6: Abdeckscheibe
- 7: Instrumententafel
- 8: Oberseite
- 9: Öffnung
- 10: Abschirmgitter
- 11: Gitterelement
- 12: erste Seitenfläche
- 13: zweite Seitenfläche
- 14: Gitteröffnung
- 15: Abdeckrahmen
- 16: abstehender Rand
- 17: Gitterrahmen
- 18: Vertiefung
- 21: Projektionsspiegel
- 22: Projektor
- 23: Bewegungseinrichtung
- 24: erstes Federelement
- 25: zweites Federelement
- 26: Richtungspfeil
- 26a: erste Richtung
- 26b: zweite Richtung
- 27: Schiene
- 28: Führungselement
- 30: Gehäuse
- 31: abstehender Rand
- 40: Kraftfahrzeug
- 41: Lenksäule

- L: Projektionsstrahlenbündel
- A: Anordnungsrichtung
- P: Projektionsrichtung

## Patentansprüche

1. Anordnung zur Reflexionsminderung für eine Frontscheibenanzeigeeinrichtung (1) für ein Kraftfahrzeug (40), umfassend:
- eine transparente Abdeckscheibe (6) zum Schutz einer Projektionseinrichtung (2),
- ein Abschirmgitter (10) mit einem senkrecht oder geneigt zu einer Oberfläche der Abdeckscheibe (6) angeordneten Gitterelement (11) einer Gitterstruktur, wobei die Gitterstruktur über der Abdeckscheibe (6) angeordnet ist, und
- eine Bewegungseinrichtung (23), die dazu eingerichtet ist, das Abschirmgitter (10) in eine Bewegung zu versetzen, die parallel zur Oberfläche der Abdeckscheibe (6) ist.

2. Anordnung nach Anspruch 1, **dadurch gekennzeichnet, dass** die Bewegung eine rotatorische oder translatorische Bewegung ist.

3. Anordnung nach einem der Ansprüche 1 oder 2, **dadurch gekennzeichnet, dass** die Bewegungseinrichtung (23) das Abschirmgitter (10) wechselweise in gegenläufige Bewegungsrichtungen bewegt.

4. Anordnung nach einem der Ansprüche 1 bis 3, **dadurch gekennzeichnet, dass** die Bewegungseinrichtung (23) ferner dazu eingerichtet ist,
- eine Frequenz der Bewegung des Abschirmgitters (10) basierend auf einer Bildwiedergabefrequenz der Projektionseinrichtung (2) zu wählen, und/oder
- eine Bildwiedergabefrequenz der Projektionseinrichtung (2) basierend auf einer Frequenz der Bewegung des Abschirmgitters (10) zu wählen.

5. Anordnung nach einem der Ansprüche 1 bis 4, **dadurch gekennzeichnet, dass** das Abschirmgitter (10) schwingfähig gelagert ist und von der Bewegungseinrichtung (23) zu einer Schwingungsbewegung angeregt wird.

6. Anordnung nach Anspruch 5, **dadurch gekennzeichnet, dass** die Frequenz der Schwingungsbewegung eine Resonanzfrequenz des schwingfähig gelagerten Abschirmgitters (10) ist.

7. Anordnung nach einem der Ansprüche 1 bis 6, **dadurch gekennzeichnet, dass** die Bewegungseinrichtung zumindest ein Federelement umfasst, über welches das Abschirmgitter (10) gefedert in einer Ruheposition gehalten wird.

8. Verwendung der Anordnung nach einem der Ansprüche 1 bis 7 für eine Frontscheibenanzeigeeinrichtung (1) für ein Kraftfahrzeug (40).

9. Frontscheibenanzeigeeinrichtung (1) für ein Kraftfahrzeug (40), umfassend:
- eine Projektionseinrichtung (2) zum Projizieren eines Projektionsstrahlenbündels für die Darstellung einer Abbildung mittels Reflexion an einem Anzeigenbereich (4) auf einer Frontscheibe (5) des Kraftfahrzeuges (40); und
- eine Anordnung nach einem der Ansprüche 1 bis 7, die so an der Projektionseinrichtung (2) angeordnet ist, dass die Abdeckscheibe (6) die Projektionseinrichtung (2) vor Umwelteinflüssen schützt.

10. Kraftfahrzeug (40), umfassend:
- eine Instrumententafel (7) zwischen einer Frontscheibe des Kraftfahrzeugs (40) und einer Lenksäule (41);
- die Frontscheibenanzeigeeinrichtung (1) nach Anspruch 9, wobei die Anordnung im Wesentlichen bündig zur Oberseite der Instrumententafel (7) angeordnet ist.

## Claims

1. Arrangement for reducing reflections for a windscreen display device (1) for a motor vehicle (40), comprising:
- a transparent cover pane (6) for protecting a projection device (2),
- a screen grid (10) having a grid element (11) of a grid structure arranged perpendicularly or obliquely with respect to a surface of the cover pane (6), wherein the grid structure is arranged over the cover pane (6), and
- a movement device (23), which is configured to set the screen grid (10) into a motion that runs parallel to the surface of the cover pane (6).

2. Arrangement according to Claim 1, **characterized in that** the movement is a rotational or translational movement.

3. Arrangement according to either of Claims 1 and 2, **characterized in that** the movement device (23) moves the screen grid (10) alternately in opposite movement directions.

4. Arrangement according to one of Claims 1 to 3, **characterized in that** the movement device (23) is furthermore configured
- to select a frequency of the movement of the screen grid (10) based on an image reproduction frequency of the projection device (2), and/or
- to select an image reproduction frequency of the projection device (2) based on a frequency of the movement of the screen grid (10).

5. Arrangement according to one of Claims 1 to 4, **characterized in that** the screen grid (10) is mounted in a vibration-capable manner and is excited to a vibrational movement by the movement device (23).

6. Arrangement according to Claim 5, **characterized in that** the frequency of the vibrational movement is a resonant frequency of the screen grid (10) that is mounted in a vibration-capable manner.

7. Arrangement according to one of Claims 1 to 6, **characterized in that** the movement device comprises at least one spring element by way of which the screen grid (10) is held by spring force in a rest position.

8. Use of the arrangement according to one of Claims 1 to 7 for a windscreen display device (1) for a motor vehicle (40).

9. Windscreen display device (1) for a motor vehicle (40), comprising:
- a projection device (2) for projecting a projection beam for the presentation of an image on a windscreen (5) of the motor vehicle (40) by means of reflection at a display region (4); and
- an arrangement according to one of Claims 1 to 7, which is arranged at the projection device (2) in a manner such that the cover pane (6) protects the projection device (2) against environmental influences.

10. Motor vehicle (40) comprising:
- an instrument panel (7) between a windscreen of the motor vehicle (40) and a steering column (41);
- the windscreen display device (1) according to Claim 9, wherein the arrangement is arranged substantially flush with the top side of the instrument panel (7).

## Revendications

1. Ensemble de réduction de réflexions destiné à un dispositif d'affichage de pare-brise (1) d'un véhicule automobile (40), ledit ensemble comprenant :
- une plaque de recouvrement transparente (6) destinée à protéger un dispositif de projection (2),
- une grille de blindage (10) comprenant un élément de grille (11) d'une structure de grille, lequel élément de grille est disposé perpendiculairement ou obliquement à une surface de la plaque de recouvrement (6), la structure de grille étant disposée au-dessus de la plaque de recouvrement (6), et
- un dispositif de déplacement (23) qui est conçu pour déplacer la grille de blindage (10) suivant un mouvement parallèle à la surface de la plaque de recouvrement (6).

2. Ensemble selon la revendication 1, **caractérisé en ce que** le mouvement est un mouvement de rotation ou de translation.

3. Ensemble selon l'une des revendications 1 ou 2, **caractérisé en ce que** le dispositif de déplacement (23) déplace la grille de blindage (10) alternativement dans des sens de déplacement opposés.

4. Ensemble selon l'une des revendications 1 à 3, **caractérisé en ce que** le dispositif de déplacement (23) est en outre conçu pour
- sélectionner une fréquence de déplacement de la grille de blindage (10) sur la base d'une fréquence de reproduction d'image du dispositif de projection (2), et/ou
- sélectionner une fréquence de reproduction d'image du dispositif de projection (2) sur la base d'une fréquence du mouvement de la grille de projection (10).

5. Ensemble selon l'une des revendications 1 à 4, **caractérisé en ce que** la grille de blindage (10) est montée de manière vibrante et est excitée par le dispositif de déplacement (23) pour obtenir un mouvement vibratoire.

6. Ensemble selon la revendication 5, **caractérisé en ce que** la fréquence du mouvement vibratoire est une fréquence de résonance de la grille de blindage (10) montée de manière à pouvoir vibrer.

7. Ensemble selon l'une des revendications 1 à 6, **caractérisé en ce que** le dispositif de déplacement comprend au moins un élément à ressort permettant de maintenir la grille de blindage (10) dans une position de repos de manière élastique.

8. Utilisation de l'ensemble selon l'une des revendications 1 à 7 destinée à un dispositif d'affichage de pare-brise (1) d'un véhicule automobile (40) .

9. Dispositif d'affichage de pare-brise (1) destiné à un véhicule automobile (40), ledit dispositif comprenant :
- un dispositif de projection (2) destiné à projeter un faisceau de rayons de projection afin d'afficher sur un pare-brise (5) du véhicule automobile (40) une reproduction par réflexion sur une zone d'affichage (4) ; et
- un ensemble selon l'une des revendications 1 à 7, qui est disposé sur le dispositif de projection (2) de manière à ce que la plaque de recouvrement (6) protège le dispositif de projection (2) des influences environnementales.

10. Véhicule automobile (40) comprenant :
- un tableau de bord (7) entre un pare-brise du véhicule automobile (40) et une colonne de direction (41) ;
- le dispositif d'affichage de pare-brise (1) selon la revendication 9, l'ensemble étant disposé sensiblement à fleur du côté supérieur du tableau de bord (7).
